# EUROPEAN PATENT APPLICATION

(11) **EP 3 671 409 A1**
(43) Date of publication of application: **24.06.2020**
(21) Application number: 18214026.9
(22) Date of filing: 19.12.2018
(51) Int. Cl.: G06F 3/01, G06F 3/038, G06N 20/00

(54) **A HUMAN-MACHINE INTERFACE**

(71) Applicant: Siemens Aktiengesellschaft, 80333 München (DE)
(72) Inventor: Soler Garrido, Josep, 81547 München (DE)

(57) **Abstract**

A human machine interface (1) comprising at least one physiological sensor (4) attached to a user to generate sensor data supplied to a computer-implemented machine learning model, MLM, (3) adapted to calculate in response to the received sensor data user-specific commands output by said human machine interface (1).

## Description

The invention relates to a human-machine interface, in particular to a human-machine interface for an automation system, and to a method for training a computer-implemented machine learning model implemented in such a human-machine interface.

Human-machine interfaces in an industrial environment can be used for different purposes, in particular for generating commands for machines or for annotating data. An automation system is a complex system comprising a plurality of different machines, controllers and actuators such as robot arms. The provision of human-machine interfaces in an automation system is required for communication between human operators and the entities of the automation system performing tasks in an industrial workspace.

Human-machine interfaces are common in factory automation settings and allow for control of complex processes, machines and systems using either operator-held or panel-based devices. Conventional human-machine interfaces such as a control panel or a keyboard incur a relatively high latency for entering data into the automation system and/or for command selection by the human operator. Further, conventional human-machine interfaces require the operator to focus their attention and their hands on a screen or control panel, away from entities of the automation system such as robot arms, transport bands, machine tool cabins, etc. making it difficult for the operator to provide precisely-timed signals when certain events or situations in the automation system occur.

Accordingly, human-machine interfaces have been provided that require less attention of the human operator when handling the human-machine interface. For example, some human-machine interfaces use voice commands and computer speech recognition or gesture-based control via computer vision to provide user commands and/or to input data into the automation system. However, these conventional human-machine interfaces are limited to the coverage range of a microphone or camera sensors and are difficult to be implemented reliably in industrial environments, in particular due to acoustic and/or electro-magnetic noise or varying lighting conditions or operator posture.

Accordingly, it is an object of the present invention to provide a human-machine interface which is robust against environmental influences, in particular in an industrial workspace, which can be used by an operator efficiently without limiting the ability to react immediately to changes in the industrial workspace.

This object is achieved by a human-machine interface according to a first aspect of the present invention comprising the features of claim 1.

The invention provides according to the first aspect a human-machine interface comprising at least one physiological sensor attached to a user to generate sensor data supplied to a computer-implemented machine learning model trained on user-specific training data adapted to calculate in response to the received sensor data user-specific commands output by said human machine interface.

The human-machine interface according to a further aspect of the present invention is user-specific and has been trained in a training phase on user-specific training data to provide later in an inference phase user-specific commands.

The human-machine interface according to the first aspect of the present invention has the advantage that it can be easily operated by the respective user without limiting his attention to the industrial environment surrounding the user. A further advantage of the human-machine interface according to the first aspect of the present invention is that it can be used outside a coverage range of a microphone and/or a camera and that it is robust against acoustic noise and/or varying lighting conditions in the industrial environment.

A further advantage of the human-machine interface according to the first aspect of the present invention is that it is robust against electromagnetic noise generated in the industrial environment of an automation system.

The human-machine interface according to the first aspect of the present invention is further user-specific and has been trained on user-specific training data so that it can only be used by the respective user and not by any other human operator. This can be exploited in some use cases to increase security of the automation system.

In a possible embodiment of the human-machine interface according to the first aspect of the present invention, the machine learning model is trained by triggering the user to perform gestures to generate user-specific training data supplied to the machine learning model.

In a still further possible embodiment, the machine learning model is trained by triggering the user to imagine gestures to generate user-specific training data supplied to the machine learning model.

In a still further possible embodiment of the human-machine interface according to the first aspect of the present invention, the physiological sensor comprises one or more electrodes attached directly to the user to capture user-specific physiological signals sampled by a sampling device to generate sensor data supplied to the machine learning model.

In a possible embodiment of the human-machine interface according to the first aspect of the present invention, the physiological sensor comprises one or more electrodes which are attached indirectly by means of a cap or garment to the user to capture user-specific physiological signals sampled by a sampling device to generate sensor data supplied to the machine learning model.

In a possible embodiment of the human-machine interface according to the first aspect of the present invention, the sampling device is carried by the user.

In a further possible embodiment of the human-machine interface according to the first aspect of the present invention, the machine learning model is deployed on a target device to calculate in response to the received sensor data the user-specific commands.

In a further possible embodiment of the human-machine interface according to the first aspect of the present invention, the calculated user-specific commands are output by the human machine interface to at least one actuator.

In a still further possible embodiment of the human-machine interface according to the first aspect of the present invention, the calculated user-specific commands are displayed on a display of said target device and/or on a display of the sampling device.

In a still further possible embodiment of the human-machine interface according to the first aspect of the present invention, the machine learning model comprises a computer-implemented artificial neural network deployed on the target device having an input layer, stacked hidden layers and an output layer.

In a further possible embodiment of the human-machine interface according to the first aspect of the present invention, the computer-implemented artificial neural network comprises a convolutional neural network.

In a still further possible embodiment of the human-machine interface according to the first aspect of the present invention, the computer-implemented artificial network comprises a recurrent neural network.

In a still further possible embodiment of the human-machine interface according to the first aspect of the present invention, an edge device is used to train the computer-implemented machine learning model deployed on a target device.

In a further possible embodiment of the human-machine interface according to the first aspect of the present invention, the computer-implemented trained machine learning model deployed on the target device is adapted to classify the received sensor data to generate user-specific commands in real time.

The invention further provides according to a further second aspect an automation system having the features of claim 12.

The invention provides according to the second aspect an automation system comprising a human machine interface adapted to provide user-specific commands and/or annotations related to said automation system,
wherein the human-machine interface of the automation system comprises at least one physiological sensor attached to a user to generate sensor data supplied to a computer implemented machine learning model trained on user-specific training data and adapted to calculate in response to the received sensor data user specific commands output by said human machine interface.

The invention further provides according to a further third aspect a method for generating user-specific commands comprising the features of claim 13.

The invention provides according to the third aspect a method for generating user-specific commands comprising the steps of:
capturing user-specific physiological signals,
sampling the captured physiological signals to generate sensor data and
processing the sensor data by a computer-implemented machine learning model trained on user specific training data to calculate user-specific commands.

In a possible embodiment of the method according to the third aspect of the present invention, sensor data is classified by the computer-implemented machine learning model to calculate user-specific commands and/or annotations related to an automation system in real time.

In a further possible embodiment of the method according to the third aspect of the present invention, the computer-implemented machine learning model is trained on user-specific training data, wherein the user is triggered to perform and/or to imagine gestures causing user-specific physiological signals sampled to generate user-specific training data.

The invention further provides according to a further aspect a method for training a computer-implemented machine learning model comprising the features of claim 16.

The invention provides according to the fourth aspect a method for training a computer-implemented machine learning model, in particular a machine learning model of a human machine interface according to the first aspect of the present invention, wherein the method comprises the steps of: unsupervised training of an autoencoder representing user-specific physiological sensor data of an idle user, recording physiological sensor data of the user while performing and/or imaging repeatedly gestures associated with user-specific commands, using the trained autoencoder to extract from the recorded physiological sensor data relevant sensor data portions to discard artifacts and
using the extracted relevant sensor data portions for supervised training of the machine learning model.

In the following, possible exemplary embodiments of the different aspects of the present invention are described in more detail with reference to the enclosed figures.
- Fig. 1: shows a block diagram of a possible exemplary embodiment of a human-machine interface according to the first aspect of the present invention;
- Fig. 2: shows a flowchart of a method for generating user-specific commands according to a further aspect of the present invention;
- Fig. 3: shows a block diagram of a possible exemplary embodiment of a human-machine interface according to the present invention in an industrial environment;
- Fig. 4: shows a block diagram of a further possible exemplary embodiment of a human-machine interface according to the present invention illustrating a training process of such a human-machine interface;
- Fig. 5: shows a signal diagram illustrating a possible process for training and deploying a computer-implemented machine learning model of a human-machine interface according to the present invention;
- Fig. 6: illustrates a training of a computer-implemented machine learning model on user-specific training data according to a further aspect of the present invention;
- Fig. 7: shows a flowchart of a possible exemplary embodiment of a method for training a computer-implemented machine learning model according to a further aspect of the present invention.

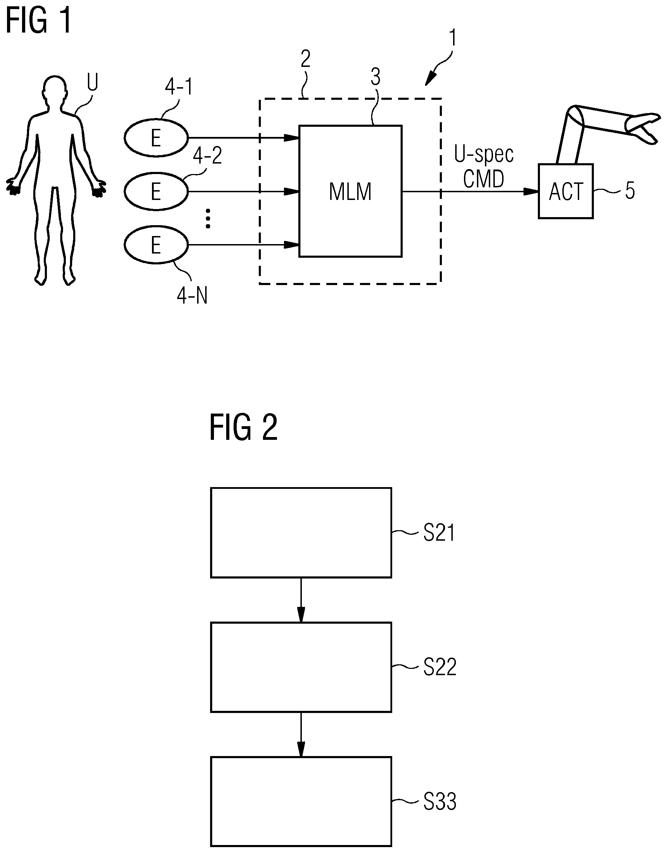

As can be seen from the block diagram of Fig. 1, a human-machine interface 1 according to the first aspect of the present invention can be deployed in a possible exemplary embodiment on a target device 2. The target device 2 comprises one or more processors to implement a user-specific trained machine learning model 3 as illustrated in the block diagram of Fig. 1. One or more physiological sensors 4-1, 4-2 ... 4-n can be connected to the computer-implemented machine learning model 3 as illustrated in Fig. 1. The number of physiological sensors 4-i connected to the machine learning model 3 can vary depending on the use case. In a possible embodiment, the physiological sensors 4-i can comprise electrodes attached directly or indirectly to a user U to capture physiological signals from the user U which can be transformed to sensor data supplied to the computer-implemented machine learning model 3 as illustrated in Fig. 1. The sensor data can be processed before being applied to the MLM3, in particular the sensor data can be filtered. The user-specific trained machine learning model 3 has been trained on user-specific training data. The computer-implemented machine-learning model 3 is adapted to calculate in response to the received sensor data during an operation or inference phase user-specific commands which are output by the computer-implemented machine learning model 3 of the human-machine interface 1. In the illustrated exemplary embodiment of Fig. 1, the calculated user-specific command is output to an actuator 5 of an automation system ASYS such as a robot arm.

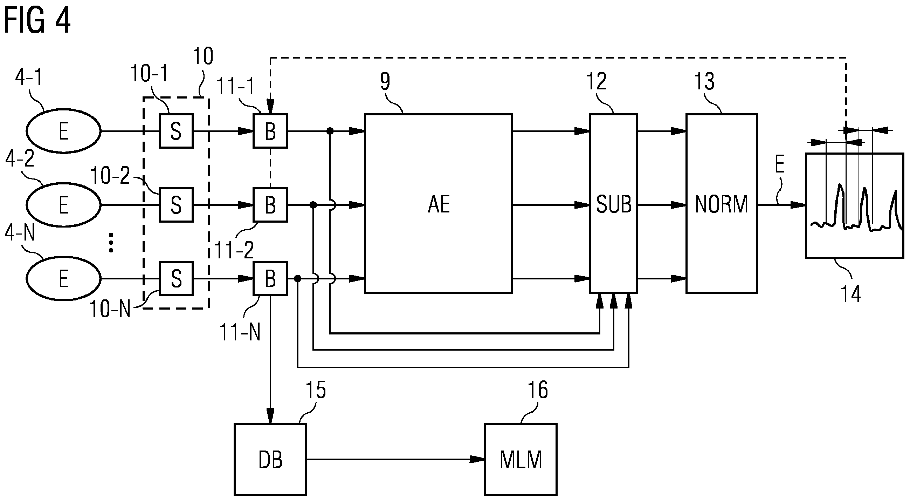

In a possible embodiment, the user-specific trained machine learning model 3 is trained by triggering a user U to perform and/or to imagine gestures to generate user-specific training data supplied to the machine learning model 3 for training the machine learning model 3. The gestures can comprise any kind of body movements such as moving a limb of the body of the user U or by performing gestures with the head such as raising a brow or by shaking the head of the user U. Gestures can for instance comprise raising a hand or a finger or blinking with the left or right eye. The physiological sensors 4-i can be placed on the head or body of the operator or user U and can be adapted to capture electroencephalographic EEG or electromyographic EMG signals. When performing a gesture such as a movement of a limb and/or performing a face gesture, electric potentials are generated which can be captured by the physiological sensors 4-i illustrated in Fig. 1. Even if the user U only imagines such gestures, corresponding electrical potentials can be generated and captured by the physiological sensors 4-i. During a training phase, the user U can be triggered to perform and/or to imagine predefined gestures to generate user-specific training data which is used to perform a user-specific training of the machine learning model MLM 3. After having been implemented in the target device 2, the machine learning model MLM 3 having been trained on the user-specific training data is adapted to calculate in response to received sensor data user-specific commands output by the human-machine interface 1. The physiological sensors 4-i can comprise one or more electrodes as illustrated in Fig. 1 attached to the user U to capture the user-specific physiological signals sampled by a sampling device 10 (as shown in Fig. 4) to generate sensor data supplied to the machine learning model MLM 3. The electrodes can be either attached directly to the body of the user U or indirectly by means of a cap, helmet, garment, band etc. to the body of the user U to capture the user-specific physiological signals. User-specific physiological signals are sampled by a sampling device 10 which can be carried by the user U to generate sensor data supplied to the machine learning model MLM 3 as illustrated in Fig. 4. The sampling device 10 carried by the user U can supply the sampled sensor data to the machine learning model 3 via a wired or a wireless link. In the illustrated exemplary embodiment of Fig. 1, the sensor data is supplied via a wired sensor signal line to the user-specific trained machine learning model 3. In an alternative embodiment, the sampled sensor device 6 is supplied by the sampling device 10 to the target device 2 via a wireless link. The machine learning model MLM 3 deployed on a processor of the target device 2 is adapted to calculate in response to sensor data received via the wired or wireless link user-specific commands which may be output by the human-machine interface 1 to one or more entities of an automation system ASYS. For instance, the calculated user-specific command can be output by the human-machine interface 1 to at least one actuator 5 of an automation system as illustrated in the exemplary embodiment of Fig. 1. The calculated user-specific commands can also be displayed on a display of the target device 2 and/or on a display of the sampling device 10 carried by the user U.

In a possible embodiment, the machine learning model MLM 3 as illustrated in Fig. 1 can comprise a computer-implemented artificial neural network, ANN, deployed on the target device 2. The artificial neural network can comprise an input layer, stacked hidden layers and an output layer. In a possible embodiment, the computer-implemented artificial neural network, ANN, deployed on the target device 2 comprises a convolutional neural network, CNN. In a further possible embodiment, the artificial neural network, ANN, deployed on the target device 2 can also comprise a recurrent neural network, RNN.

In a possible embodiment, an edge device can be used to train the computer-implemented machine learning model 3 deployed on the target device 2. The computer-implemented trained machine learning model 3 deployed on the target device 2 is adapted in a possible embodiment to classify the received sensor data to generate user-specific commands in real time. The computer-implemented trained machine learning model 3 deployed on the target device 2 can be used in further use cases for other purposes as well such as generating annotations to a process performed by the automation system. Such human-provided annotations could be for example related to the quality with which the automation process is being performed, or be used to signalize critical stages of said automation process. The machine learning model 3 deployed on the target device 2 is capable of processing the received physiological signals and/or sensor data to generate commands and/or control signals for the entities of an automation system, for instance for a PLC controller of an industrial PC of the automation system. The generation of user-specific training data for training the machine learning model 3 makes detection of commands more robust against artifacts and noise in industrial environments. The physiological sensors 4-i comprising one or more electrodes can be placed on the body and/or head of the user U either directly or attached to a cap, helmet or garment or similar elements. The physiological sensors 4-i produce electrical signals in response to muscle contractions and/or to brain activities of the user U. Electrical signals generated by different electrodes are sampled by a sampling device 10 which the operator can carry and can be sent to a target device 2, for example via a wireless network interface. In a possible embodiment, an edge computing device 7 of an automation system can be used to train a machine learning algorithm able to convert received sensor data into user-specific commands and/or user-specific control signals using a set of training examples. The edge computing device can be for example an industrial PC.

Fig. 2 shows a flowchart of a possible exemplary embodiment of a method for generating user-specific commands CMDS according to a further aspect of the present invention.

In a first step S21, user-specific physiological signals are captured. For instance, user-specific physiological signals can be captured by means of one or more electrodes attached directly or indirectly to the body of the user U. These physiological signals can comprise for instance electroencephalographic EEG and/or electromyographic EMG signals.

In a further step S22, the captured physiological signals are sampled to generate sensor data. Sampling in step S22 can be performed by a sampling device carried by the user U. The generated sensor data can be supplied via a wired or wireless link to a computer-implemented machine learning model 3 having been trained previously on user-specific training data.

In a further step S23, the sensor data received by the computer-implemented machine learning model 3 trained on user-specific training data is processed to calculate user-specific commands. In a possible embodiment, the sensor data is classified by the computer-implemented trained machine learning model 3 to calculate user-specific commands and/or annotations related to an automation system in real time. The deployed computer-implemented machine learning model 3 is trained in a possible embodiment on user-specific training data in a training phase wherein the user is triggered to perform and/or to imagine gestures causing user-specific physiological signals sampled to generate user-specific training data supplied to the computer-implemented machine learning model 3 for training the machine learning model 3.

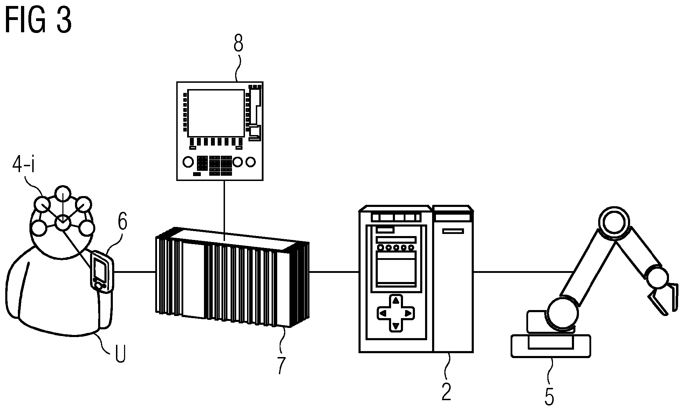

Fig. 3 shows a block diagram for illustrating a possible exemplary setup of a human-machine interface 1 trained in an industrial environment, in particular an automation system. In the illustrated exemplary embodiment, a sensor device 6 carried by the user U is connected to a series of physiological sensors 4-i for receiving EEG/EMG signals. The electrodes 4-i illustrated in Fig. 3 can be placed on the body and/or head of the user U either directly or attached to a cap, helmet, garment, etc. The electrodes 4-i can produce electrical signals in response to muscle contractions of muscles of the body of the user U and/or to brain activities performed by the brain of the user U. Electrical signals generated by the different electrodes 4-i can be sampled by a sampling device 10 of the sensor device 6 carried by the user U and can be sent in turn to an edge computing device 7, for example via a wireless network interface of the automation system. The edge computing device 7 of the setup shown in the block diagram of Fig. 3 can be used to train a machine learning algorithm able to convert sensor data into user-specific commands and/or control signals using a set of training data. A conventional human-machine interface or display 8 can be connected to the edge computing device 7 which can be used by the operator during system training to control the process. The target device 7 where the trained machine learning application is deployed in order to convert new sensor data into commands after training has been accomplished can be connected to the edge computing device 7 as illustrated in Fig. 3. After the machine learning model MLM 3 has been trained successfully, it can be implemented or deployed on a process of the target device 2 for operation in the automation system. A machine or actuator 5 can be connected to the target device 2 as shown in Fig. 3 and receive the user commands and/or control signals generated by the machine learning model 3 in response to the received sensor data.

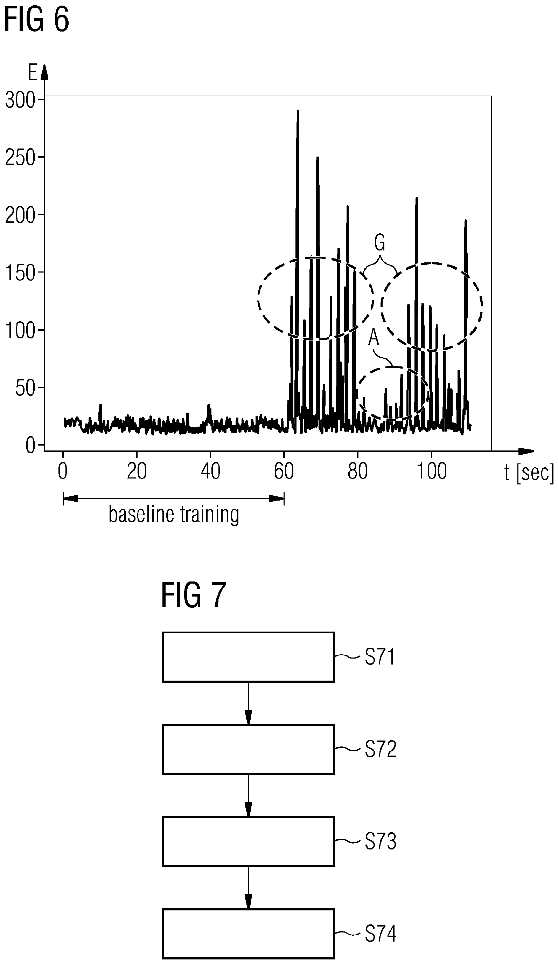

Fig. 4 shows a block diagram for illustrating a possible exemplary embodiment for performing the training of a computer-implemented machine learning model MLM 3, in particular a machine learning model MLM 3 of a human-machine interface 1 according to the present invention. In the illustrated setup of Fig. 4, an autoencoder 9 is used for the training method. As can be seen in Fig. 4, the physiological sensors such as electrodes 4-1, 4-2 ... 4-n are connected to sampling units 10-1, 10-2, 10-n of a sampling device 10 which can form part of the sensor device 6 illustrated in the block diagram of Fig. 3. User-specific physiological signals provided by the physiological sensors 4-i are sampled by the sampling units 10-i to generate sampled sensor data. The generated sensor data can be stored in data buffers 11-1, 11-2 ... 11-n as illustrated in Fig. 4. The sensor data generated from the physiological signals can be stored temporarily in the data buffers 11-i and supplied to the input of the autoencoder 9 shown in Fig. 4. The physiological sensor data of the user U can be recorded and stored in the data buffers 11-i where the user U is performing and/or imagining repeatedly gestures associated with user-specific commands. Further, the physiological sensor data of the same user U are also recorded while the user U is idle. First, an unsupervised training of the autoencoder 9 representing user-specific physiological sensor data of the idle user U can be performed. Further, physiological sensor data of the user U while separately performing and/or imagining repeatedly gestures associated with user-specific repeatedly gestures associated with user-specific commands can be recorded. The trained autoencoder 9 can then be used to extract from the recorded physiological sensor data relevant sensor data portions to discard artifacts. For this purpose, the output of the autoencoder 9 can be connected to a subtractor 12 to subtract an input to generate an reconstruction error vector supplied to a normalization computation unit 13 to calculate a reconstruction error as illustrated in the signal diagram of Fig. 6. The trained autoencoder 9 can be used to extract from the recorded physiological sensor data relevant sensor data portions corresponding to the repeated gestures, discarding the periods between repetitions and any other artifacts using the generated reconstruction error signal as illustrated in Fig. 6 which can be stored temporarily in a memory 14 as shown in the block diagram of Fig. 4. The selection and/or extraction of relevant sensor data portions can be performed in a possible embodiment automatically. In an alternative embodiment, the selection of relevant sensor data portions can be performed by a user receiving assistance by the autoencoder 9. The extracted relevant sensor data portions can be stored as training examples in a database 15 for performing a supervised training of the machine learning model MLM 3 as illustrated in the block diagram of Fig. 4, wherein the trained machine learning model MLM 3 can be deployed as a user-specific trained machine learning model MLM 3 in a processor of a target device 2 as illustrated for instance in the block diagram of Fig. 1.

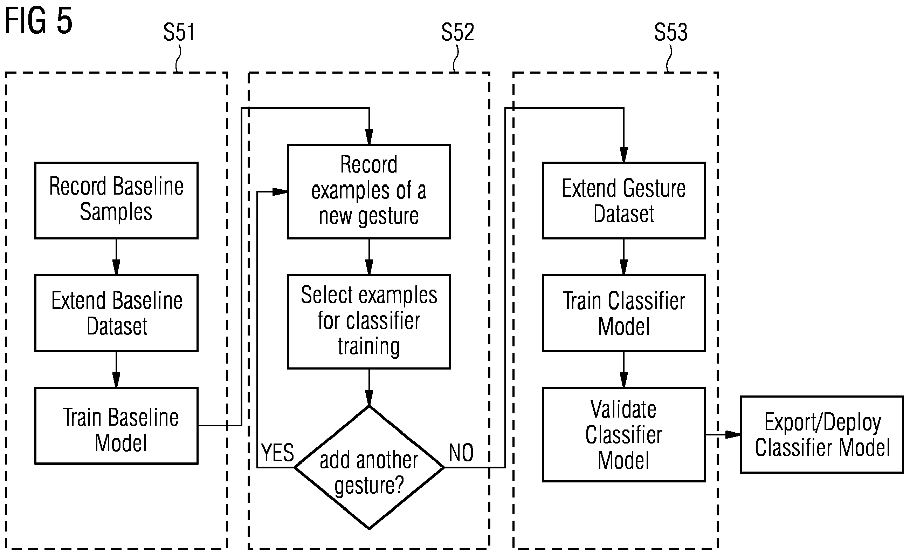

Fig. 5 shows a diagram for illustrating a possible exemplary embodiment of a procedure to train and deploy a machine learning model MLM 3. A machine learning process can comprise a training of a baseline model, i.e. autoencoder 9, to generate training examples used to train the machine learning model MLM 3. A first step S51 comprises a baseline training of the machine learning model MLM 3. Sensor data can be captured from the users U in the environment where the target device 2 is going to be used without a user U performing any movements or gestures that are later going to be used as commands or signals for the respective machine or actuator 5 in the automation system. Accordingly, the respective user-specific physiological sensor data are used to train a baseline model of an idle user U. The samples of the sensor data can be captured in a possible embodiment at a certain sampling rate, e.g. 200 Hz, and can be stored in a possible embodiment in a memory of an edge computing device such as the edge computing device 7 illustrated in the automation system of Fig. 3. The sampled sensor data can be stored in a possible embodiment for a certain period of time, for example for 1.5 minutes. In a possible embodiment, sampling at a sampling rate can be performed by the sampling entities 10-i of the sampling device 10 illustrated in Fig. 4. The sampled sensor data can be stored in data buffers 11-i as shown in the block diagram of Fig. 4. In a possible embodiment, the data buffers 11-i can be implemented on an edge computing device 7 of an automation system as illustrated in the block diagram of Fig. 3. In a possible embodiment, a set of captured samples or sensor data can be extended either using prerecorded samples or by means of data augmentation techniques such as generating synthetic samples by adding perturbations or noise to the captured samples. The data augmentation techniques can be used to simulate disturbances or artifacts such as electromagnetic noise in the automation environment. The autoencoder machine learning model MLM 3 is trained on the basis of the user-specific physiological sensor data. The machine learning model MLM 3 is trained to try to learn an efficient coding of the baseline samples and/or a preprocessed version of the baseline samples in an unsupervised manner. Accordingly, an unsupervised training of an autoencoder 9 representing user-specific physiological sensor data of the idle user U can be performed. Typical preprocessing of the samples can include filtering to select specific frequency bands or to reduce noise, time-windowing, normalization or and/or transformation to the frequency domain. The autoencoder such as the autoencoder 9 illustrated in the block diagram of Fig. 4 attempts to reconstruct preprocessed inputs at its output as exactly as possible, based on a low-dimensional learned representation of the valid samples. The machine learning model MLM 3 can be trained on an edge computing device such as the edge computing device 7 illustrated in Fig. 3.

In a further step S52, a user U can be triggered to record examples of gestures to be used as control signals and/or user-specific commands for the automation system. A user U can be triggered to start recording samples from the sensors and can perform repeatedly the desired predefined gestures G to be recognized, for a predefined number of times (for example 20 times). These gestures G can comprise for example movements of limbs, blinking of the eyes, applying muscle tension in parts of the user's body where a sensing physiological electrode 4-i has been placed. Further, it is possible to perform the training on the basis of individual just imagined movements of limbs recorded via the physiological electrodes 4-i. The captured samples can be applied to perform data preprocessing steps applied to the autoencoder model wherein a difference between the output and the input of the autoencoder 9, i.e. the reconstruction loss E, can be used to select exact time points when the gestures G where performed during the sample recording step. An example of the calculated reconstruction loss E output by the normalization calculation unit 13 is illustrated in Fig. 6. The calculated reconstruction loss or error E can be stored temporarily in a memory 14 to extract relevant sensor data portions to discard artifacts A. The peaks in the diagram illustrated in Fig. 6 correspond to times when the autoencoder 9 performs a poorer reconstruction of the signals. This happens exactly at the times when the user U is performing the predefined gestures G which were not part of the baseline samples. The system extracts only samples corresponding to the desired gestures and commands for step S53. Two alternative approaches can be foreseen. In a first embodiment, a fully automated approach is applied where the edge computing device 7 extracts the relevant sensor data portions, for example by selecting only those samples where the reconstruction error E is above a predefined threshold. In a further alternative embodiment, a user-driven approach is applied where the user U is presented with the reconstruction loss plot as illustrated in Fig. 6 on a display/HMI device and can select the time points corresponding to the gestures G performed by him based on the displayed reconstruction error with the additional knowledge about the timing with which the samples were generated by the user U. This allows the user U to discard any artifacts A due to noise and/or undesired movements or gestures. In the illustrated exemplary reconstruction error plot of Fig. 6, an autoencoder reconstruction loss E has been captured by a system prototype when a user U performs blinking of left and right eyes, respectively, 10 times every 1 to 2 seconds after 60 seconds of no activity where the user U has been idle.

In a further step S53, a classification model can be trained and deployed. Once samples for all required gestures and/or commands have been collected, the dataset can be extended in a possible embodiment with samples from the baseline, and optionally augmented with augmentation techniques such as creating new synthetic samples by adding noise or perturbations. The final datasets can be used on the edge computing device 7 to train a classifier machine learning model MLM 3 which, given a new set of sensor samples at the input, is able to estimate the likelihood that the samples correspond to the baseline or to each of the gestures/examples which were on the dataset. After training has been accomplished, the user U has the option to visualize the response of the trained machine learning model MLM 3 to new gestures and/or commands in order to verify that its performance is satisfactory before deploying the machine learning model MLM 3 on a target device 2 to classify new sensor data during inference. Finally, the machine learning model MLM 3 can be deployed on the target device 2 for online classification of samples, for example on a machine learning hardware accelerator, in order to be able to classify sensor samples in real time. An alternative scenario would be to perform the classification directly on device 7 and send the results to device 2. Depending on the interfaces available it may be possible to achieve real time operation in this way as well. In this step, engineering tools specific for the target device 2 can be used in order to connect the output of the trained machine learning model MLM 3 to application-specific functions, for example a function to control a robot arm and/or to annotate PLC data.

Fig. 7 shows a flowchart of a possible exemplary embodiment for a method for training a computer-implemented machine learning model MLM 3, in particular a machine learning model MLM 3 of a human-machine interface 1.

In a first step S71, an unsupervised training of an autoencoder such as the autoencoder 9 illustrated in Fig. 4 representing user-specific physiological sensor data of an idle user U is performed.

In a further step S72, physiological sensor data of the user U are recorded while performing and/or imagining repeatedly gestures associated with user-specific commands.

In a further step S73, the trained autoencoder 9 is used to extract from the recorded physiological sensor data relevant sensor data portions to discard artifacts.

In a further step S74, the extracted relevant sensor data portions are used for supervised training of the machine learning model MLM 3.

The human-machine interface 1 according to the present invention provides low-latency for precise timing, e.g. for accurate data annotation and/or actuator interaction. The human-machine interface 1 according to the present invention does not require the operator or user U to focus his attention on a particular device and/or to use his hands. The human-machine interface 1 is flexible and robust against environmental noise and is reconfigurable in terms of different types of control signals and/or commands.

On-body sensors can be coupled with machine learning for command interpretation. The invention further provides for a flexible training method with built-in noise and/or artifact resilience. The machine learning model MLM 3 can be deployed on an edge device providing low latency. For example, the machine learning model MLM 3 can be deployed on an industrial edge device such as SIMATIC NPU or a PLC or an IPC of an automation system.

In a possible embodiment, training steps, i.e. the baseline training and/or the subsequent classifier training, can be offloaded on a remote, e.g. cloud-based, server instead performing the training steps locally. The human-machine interface 1 according to the present invention allows an operator to send rapid commands to a controller such as a PLC controller of an automation system whenever a certain situation arises, for example if a tool in a milling machine of the automation system has broken or e.g. if the load on a spindle of a machine is too high. Further, the human-machine interface 1 can be also used to generate annotated datasets that can later be used to train other prediction models.

## Claims

1. A human machine interface (1) comprising at least one physiological sensor (4) attached to a user (U) to generate sensor data supplied to a computer-implemented machine learning model, MLM, (3) trained on user-specific training data adapted to calculate in response to the received sensor data user-specific commands output by said human machine interface (1) .

2. The human machine interface according to claim 1, wherein the machine learning model, MLM, (3) is trained by triggering the user (U) to perform and/or to imagine gestures to generate user-specific training data supplied to the machine learning model, MLM, (3).

3. The human machine interface according to claim 1 or 2, wherein the physiological sensor (4) comprises one or more electrodes attached directly or indirectly to the user (U) to capture user-specific physiological signals sampled by a sampling device (10) carried by the user (U) to generate sensor data supplied to the machine learning model, MLM, (3).

4. The human machine interface according to any of the preceding claims 1 to 3, wherein the machine learning model, MLM, (3) is deployed on a target device (2) to calculate in response to the received sensor data the user-specific commands.

5. The human machine interface according to any of the preceding claims 1 to 4, wherein the calculated user-specific commands are output by the human machine interface (1) to at least one actuator (5).

6. The human machine interface according to any of the preceding claims 1 to 5, wherein the calculated user-specific commands are displayed on a display of said target device (2) and/or on a display of the sampling device.

7. The human machine interface according to any of the preceding claims 1 to 6, wherein the machine learning model, MLM, (3) comprises a computer-implemented artificial neural network, ANN, deployed on said target device (2) having an input layer, stacked hidden layers and an output layer.

8. The human machine interface according to claim 7, wherein the computer-implemented artificial neural network, ANN, comprises a convolutional neural network, CNN.

9. The human machine interface according to claim 7, wherein the computer-implemented artificial network, ANN, comprises a recurrent neural network, RNN.

10. The human machine interface according to any of the preceding claims 1 to 9, wherein an edge device (7) is used to train the computer-implemented machine learning model, MLM, (3) deployed on a target device (2).

11. The human machine interface according to any of the preceding claims 1 to 10, wherein the computer-implemented trained machine learning model, MLM, (3) deployed on the target device (2) is adapted to classify the received sensor data to generate user-specific commands in real time.

12. An automation system comprising a human machine interface (1) according to any of the preceding claims 1 to 11 adapted to provide user-specific commands and/or annotations related to said automation system.

13. A method for generating user-specific commands comprising the steps of:
(a) capturing (S21) user-specific physiological signals;
(b) sampling (S22) the captured physiological signals to generate sensor data; and
(c) processing (S23) the sensor data by a computer-implemented machine learning model, MLM, (3) to calculate user-specific commands.

14. The method according to claim 13, wherein the sensor data is classified by computer-implemented machine learning model, MLM, (3) to calculate user-specific commands and/or annotations related to an automation system in real time.

15. The method according to claim 13 or 14, wherein the computer-implemented machine learning model, MLM, (3) is trained on user-specific training data, wherein the user is triggered to perform and/or to imagine gestures causing user-specific physiological signals sampled to generate user-specific training data.

16. A method for training a computer-implemented machine learning model, MLM, (3) in particular a machine learning model of a human machine interface (1) according to any of the preceding claims 1 to 12,
the method comprising the steps of:
(a) unsupervised training (S71) of an autoencoder (9) representing user-specific physiological sensor data of an idle user (U);
(b) recording (S72) physiological sensor data of the user (U) while performing and/or imaging repeatedly gestures associated with user-specific commands;
(c) using (S73) the trained autoencoder (9) to extract from the recorded physiological sensor data relevant sensor data portions to and discarding artifacts; and
(d) using (S74) the extracted relevant sensor data portions for supervised training of the machine learning model, MLM, (3).

17. The method according to claim 16,
wherein the relevant sensor data portions are extracted automatically by the trained autoencoder (9) or manually extracted by a user (U) assisted by the trained autoencoder (9).

18. The method according to claim 16 or 17,
wherein a data augmentation is performed by adding noise and/or disturbances to provide additional samples used to increase resilience against electro-magnetic interference.
